# FASCICULE DE BREVET EUROPEEN

(11) **EP 3 749 455 B1**
(45) Date de publication et mention de la délivrance du brevet: **10.11.2021**
(21) Numéro de dépôt: 19742421.1
(22) Date de dépôt: 12.04.2019
(51) Int. Cl.: B01L 3/02

(54) **SYSTEME A CRABOTAGE DE MAINTIEN EN POSITION D'UNE VIS DE REGLAGE DE VOLUME POUR PIPETTE DE PRELEVEMENT**
KLAUENKUPPLUNGSSYSTEM ZUM HALTEN DER POSITION EINER VOLUMENEINSTELLSCHRAUBE FÜR EINE PROBENAHMEPIPETTE
DOG CLUTCH SYSTEM FOR HOLDING THE POSITION OF A VOLUME ADJUSTMENT SCREW FOR A SAMPLING PIPETTE

(30) Priorité: 17.04.2018 FR 1853369
(43) Date de publication de la demande: 16.12.2020
(73) Titulaire: GILSON SAS, 95400 Villiers-le-Bel (FR)
(72) Inventeur: MALVOISIN, Hervé, 75020 PARIS (FR)
(74) Mandataire: Brevalex
(86) Numéro de dépôt international: PCT/FR2019/050876
(87) Numéro de publication internationale: WO 2019/202245

(56) Documents cités:
- FR-A1- 3 040 896
- US-A- 5 892 161

## Description

### DOMAINE TECHNIQUE

La présente invention se rapporte au domaine des systèmes de pipetage tels que les systèmes automatisés de pipetage appelés robots, ou encore plus préférentiellement les pipettes de prélèvement monocanal ou multicanaux, également dénommées pipettes de laboratoire, ou encore pipettes de transfert de liquide à déplacement d'air, destinées au prélèvement et à l'introduction calibrés de liquide dans des récipients. De telles pipettes, qu'elles soient manuelles, motorisées ou hybrides, sont destinées à être tenues en main par un opérateur durant les opérations de prélèvement et de dispense de liquide.

L'invention concerne plus particulièrement les moyens mis en œuvre pour régler le volume de liquide à prélever.

### ETAT DE LA TECHNIQUE ANTERIEURE

Sur les pipettes conventionnelles, il est prévu une vis de réglage de volume à prélever, qui est commandée en rotation par un bouton de commande de la pipette, via une tige de commande reliant ce bouton à la vis de réglage de volume.

Lorsque la pipette comporte un compteur conçu pour afficher des valeurs très précises de volume, par exemple un compteur à quatre chiffres, le réglage de la pipette sur une valeur donnée peut parfois s'avérer délicat. En effet, le dernier chiffre du compteur est généralement associé à un tambour dont la rotation peut être plus rapide que celle du bouton de commande de pipette actionné par l'opérateur, d'où la difficulté d'atteindre la valeur précise souhaitée.

Pour répondre à cette problématique, il peut être envisagé l'adjonction d'un système de maintien de la vis de réglage de volume, dans différentes positions de cette vis. Cependant, pour être en capacité de maintenir précisément la vis de réglage dans autant de positions qu'il existe de valeurs de volume différentes proposées par le compteur, il est nécessaire de concevoir des pièces de dimensions restreintes, tout en présentant des géométries extrêmement complexes. Cette contrainte implique une fabrication difficile, voire allant au-delà des limites de faisabilité des pièces requises.

Les documents US 5 892 161 et FR 3 040 896 décrivent des exemples connus de pipettes comprenant des moyens de réglage du volume de liquide à prélever dotés d'un système de maintien de la vis de réglage de volume.

### EXPOSÉ DE L'INVENTION

Pour répondre au moins partiellement à ces inconvénients, l'invention a tout d'abord pour objet un système à crabotage de maintien en position d'une vis de réglage de volume pour un système de pipetage, le système à crabotage comprenant :
- une première roue dentée comprenant des premières dents ;
- une seconde roue dentée comprenant des secondes dents, ladite première roue dentée étant une roue de blocage destinée à être fixe en rotation par rapport à une pièce fixe du système de pipetage, et la seconde roue étant destinée à être solidaire en rotation de la vis de réglage, ou inversement ;
- des moyens élastiques de rappel capables de rappeler les première et seconde roues l'une contre l'autre afin de faire coopérer les premières dents avec les secondes dents,

lesdites secondes dents de la seconde roue formant un nombre N de rangées annulaires concentriques, le nombre N étant un entier supérieur ou égal à 2 et chaque rangée étant éventuellement discontinue,
ladite seconde roue présentant au moins une zone de recouvrement de dents dans laquelle les N rangées annulaires de secondes dents présentent respectivement N secteurs de recouvrement qui se recouvrent les uns les autres selon une direction radiale de la seconde roue,
les secondes dents des N secteurs de recouvrement étant décalées angulairement les unes des autres de façon à ce qu'au moins l'une des premières dents de la première roue dentée puisse se trouver dans plusieurs positions relatives par rapport à la seconde roue, dans chacune desquelles cette première dent est au contact de l'une des secondes dents de l'un des N secteurs, et au contact de l'une des secondes dents d'un autre de ces N secteurs.

L'invention présente ainsi la particularité d'utiliser un mécanisme à crabotage pour maintenir/bloquer la vis de réglage de volume dans différentes positions. Le nombre de ces positions distinctes peut être extrêmement important, sans pour autant se confronter aux problèmes de fabrication évoqués précédemment. En effet, en prévoyant une seconde roue dentée avec plusieurs rangées annulaires concentriques de secondes dents, et en procédant au décalage angulaire de ces dents en sein de chaque zone de recouvrement, il est possible de maintenir la vis de réglage dans de nombreuses positions sans rencontrer de problème faisabilité de ces dents. En d'autres termes, l'invention se révèle particulièrement astucieuse en comparaison d'une solution ne prévoyant qu'une rangée annulaire unique de dents sur la seconde roue. Effectivement, pour atteindre le même nombre de positions de maintien qu'avec l'invention, cette seconde roue devrait alors présenter des dents de dimensions très faibles au sein de la rangée unique, pouvant s'avérer difficiles à fabriquer.

L'invention présente de préférence au moins l'une des caractéristiques optionnelles suivantes, prises isolément ou en combinaison.

Chacun des N secteurs de recouvrement de la seconde roue dentée présente un même pas P entre ses secondes dents, et le décalage angulaire entre deux secteurs de recouvrement quelconques et directement consécutifs, parmi lesdits N secteurs, présente une valeur P/N.

La première roue dentée présente une unique rangée annulaire de premières dents, présentant le même pas P entre les premières dents.

Le nombre entier N est préférentiellement égal à deux, mais il pourrait être supérieur, sans sortir du cadre de l'invention.

Ladite seconde roue présente plusieurs zones de recouvrement de dents, espacées circonférentiellement les unes des autres, le nombre de ces zones de recouvrement étant préférentiellement supérieur à trois.

Chaque rangée annulaire de secondes dents présente des portions dentées espacées circonférentiellement par des portions non dentées, et les secteurs de recouvrement sont formés aux extrémités des portions dentées.

L'invention a également pour objet un système de pipetage comprenant une vis de réglage de volume, ainsi qu'un système à crabotage tel que décrit ci-dessus, permettant de maintenir en position la vis de réglage de volume. Le système est préférentiellement une pipette de prélèvement, de préférence manuelle, mais l'invention peut s'appliquer à tout autre système de pipetage énuméré ci-dessus.

De préférence, la seconde roue dentée est solidaire d'une bague comportant un moyen de couplage en rotation traversé par la vis de réglage de volume.

Le système comporte de préférence un compteur à quatre chiffres, le compteur comprenant :
- un premier tambour renseignant sur un premier chiffre du compteur ;
- un second tambour renseignant sur un second chiffre du compteur ;
- un troisième tambour renseignant sur une troisième chiffre du compteur ; et
- un quatrième tambour renseignant sur un quatrième chiffre du compteur, le quatrième tambour étant entraîné en rotation par un système d'engrenages commandé en rotation par la vis de réglage de volume.

Enfin, ladite roue de blocage, fixe en rotation par rapport à une pièce fixe du système de pipetage, comporte des ergots radiaux logés coulissants dans des rainures longitudinales correspondantes de cette pièce fixe.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de face d'une pipette de prélèvement à déplacement d'air, selon l'invention ;
- la figure 2 représente une vue en perspective d'une partie de la pipette montrée sur la figure précédente, comprenant un système de maintien en position de la vis de réglage de volume, selon un mode de réalisation préféré de l'invention ;
- la figure 3 représente une vue en coupe d'une partie supérieure de la pipette montrée sur la figure précédente ;
- la figure 4 représente une vue en perspective d'un compteur équipant la pipette montrée sur les figures précédentes ;
- la figure 5 représente une vue en coupe longitudinale du compteur montré sur la figure précédente ;
- la figure 6 représente une vue détaillée en perspective du système de maintien à crabotage montré sur la figure 2 ;
- la figure 7 représente une vue en perspective d'une première roue dentée équipant le système de maintien à crabotage montré sur la figure précédente ;
- la figure 8 représente une vue en perspective d'une seconde roue dentée équipant le système de maintien à crabotage montré sur la figure 6 ;
- la figure 9 est une vue schématique de côté montrant la coopération entre les deux roues dentées montrées sur les figures 7 et 8.

### EXPOSÉ DÉTAILLÉ DE MODES DE RÉALISATION PRÉFÉRÉS

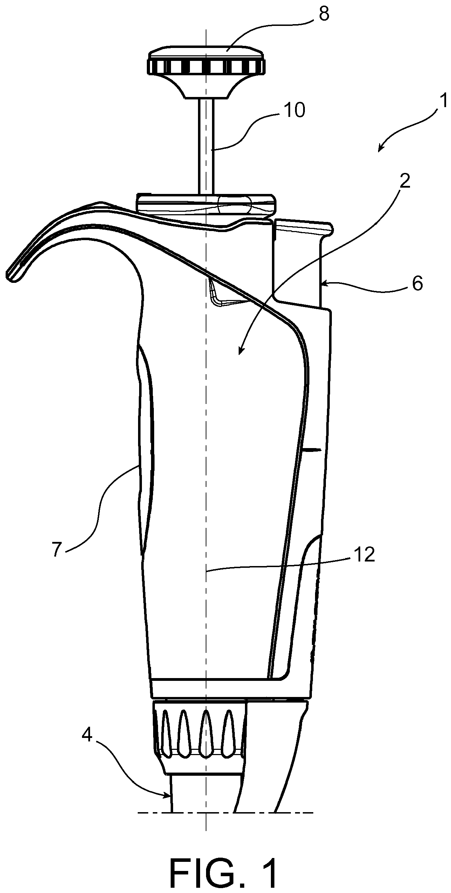

En référence tout d'abord à la figure 1, il est représenté une pipette de prélèvement 1 manuelle et monocanal, selon l'invention. Néanmoins, l'invention n'est pas limitée à une telle pipette, mais elle s'applique de manière analogue aux pipettes multicanaux ou à tout autre système de pipetage, manuel, motorisé ou hybride.

La pipette 1 à déplacement d'air, ici manuelle, comprend en partie supérieure un corps formant poignée 2, ainsi qu'une partie basse 4 destinée à intégrer à son extrémité inférieure un embout porte-cône de prélèvement (non représenté). Cet embout est prévu pour porter un cône, également dénommé consommable et destiné à être éjecté de l'embout par un système d'éjecteur 6, une fois les opérations de pipetage achevées.

Comme cela est visible sur les figures 1 à 3, la pipette 1 comporte un bouton de commande 8 destiné à être actionné par le pouce d'un opérateur, afin de réaliser les différentes opérations de pipetage comme le prélèvement du liquide, et sa dispense. Le bouton 8 est monté sur l'extrémité haute d'une tige de commande 10 destinée à être déplacée en translation durant les étapes de pipetage précitées, selon un axe central longitudinal 12 de la pipette. Le bouton 8 est couplé en rotation à la tige 10, de même que celle-ci présente une extrémité inférieure coopérant avec une vis de réglage de volume 14. Cette coopération est réalisée de telle sorte qu'une rotation de la tige de commande 10 entraîne une rotation de la vis 14 selon son propre axe, de préférence confondu avec l'axe central longitudinal 12 de la pipette.

De manière connue, la rotation de la vis de réglage 14 provoque sa translation le long de l'axe 12, ou la translation d'une autre pièce, afin de déplacer axialement un piston logé dans une chambre d'aspiration de la partie basse 4 de la pipette. C'est l'ajustement de la position haute de ce piston qui permet d'influer sur le volume prélevé ultérieurement lors du pipetage.

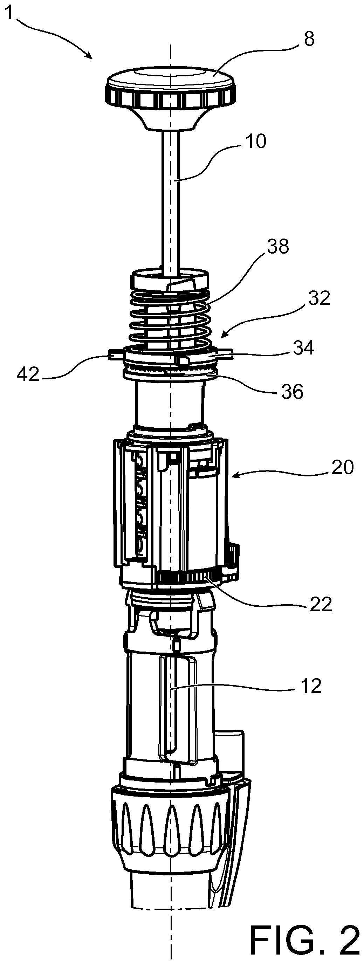

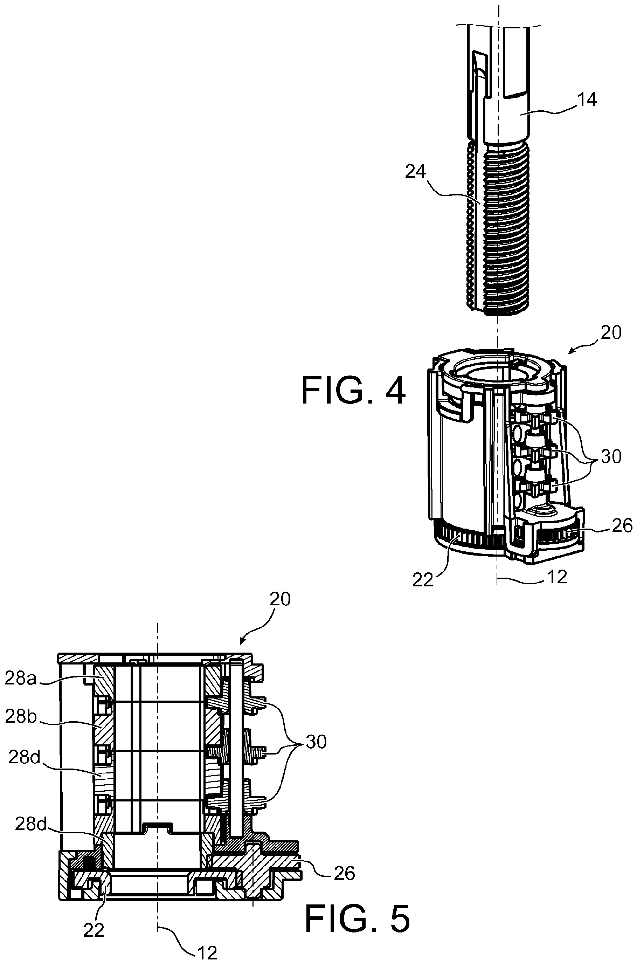

Les figures 2 et 4 montrent que la vis de réglage de volume 14 entraîne en rotation un compteur 20, destiné à afficher la valeur du volume réglé à travers une fenêtre 7 (référencée sur la figure 1) de la poignée 2. Ce compteur 20 est ici un compteur à quatre chiffres, également dénommé « compteur à quatre digits ». Ce type de compteur procure une très grande précision en comparaison des compteurs comprenant moins de chiffres, par exemple par rapport à un compteur à trois chiffres seulement.

Le compteur 20 comprend tout d'abord un système d'engrenages équipé d'une roue à dentée extérieure 22 centrée sur l'axe 12, directement entraînée en rotation par la vis de réglage 14. Cet entraînement s'effectue par exemple via un ergot en saillie vers l'intérieur à partir de la roue 22, et logé dans une rainure longitudinale 24 de la vis 14. Cette roue 22 engrène avec une autre roue excentrée 26 à denture extérieure, qui elle-même engrène avec une denture prévue sur un quatrième tambour 28d du compteur, renseignant sur le quatrième chiffre de volume réglé. Le quatrième tambour 28d, visible sur la figure 5, tourne à une vitesse élevée par rapport au bouton de commande, par exemple à une vitesse cinq fois supérieure.

Le compteur comporte également un premier tambour 28a, un second tambour 28b, ainsi qu'un troisième tambour 28c renseignant respectivement sur les premier, second, et troisième chiffres du volume réglé. Ces tambours 28a-28d sont superposés selon l'axe 12, et s'entraînent les uns les autres de façon connue, via des organes de transmission de mouvement 30.

La précision d'un tel compteur 20 est associée à la mise en œuvre d'un système spécifique à l'invention, permettant un maintien/blocage de la vis de réglage 14, une fois que celle-ci a été amenée dans la position précise conduisant à la valeur de volume souhaitée. Ce système 32, de nature à crabotage, permet également un déplacement aisé de la vis 14 entre différentes positions, lors de sa rotation effectuée pour changer la consigne de volume à prélever. Le système 32 se révèle particulièrement avantageux en ce qu'il permet d'aider l'opérateur à régler précisément le dernier chiffre du volume sur la valeur souhaitée, malgré la grande vitesse de rotation du quatrième tambour observée lors de la rotation du bouton de commande de la pipette. L'ergonomie de réglage du volume s'en trouve largement améliorée.

Le système 32 de maintien en position, visible sur les figures 2, 3 et 6, comprend globalement une première roue dentée 34 coopérant avec une seconde roue dentée 36, et un ressort de compression 38 rappelant l'une contre l'autre les deux roues coaxiales 34, 36 centrées sur l'axe 12.

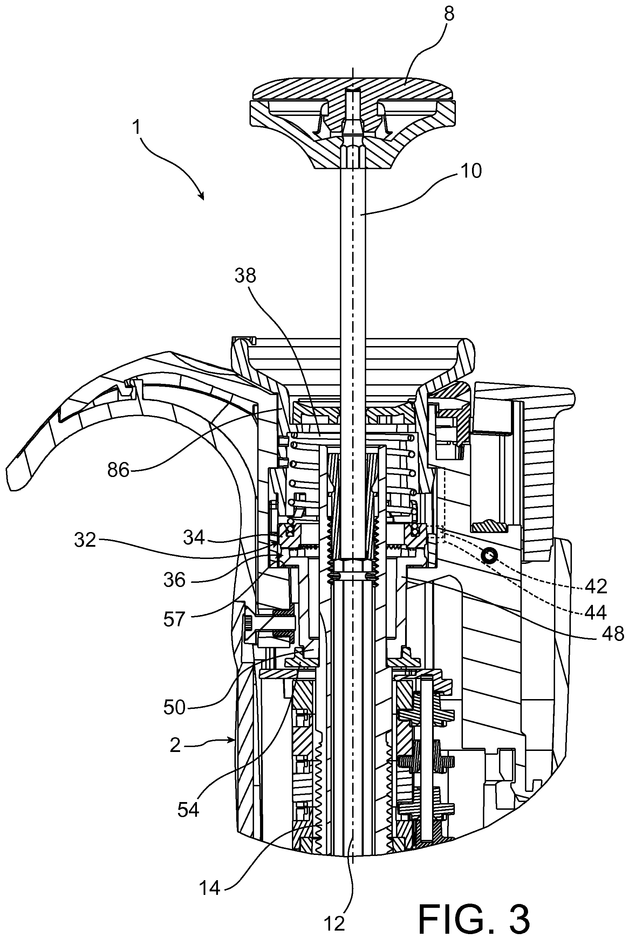

La première roue 34, celle située le plus en haut sur la pipette, comporte des premières dents 40 qui s'étendent axialement vers le bas. Cette roue 34 est fixe en rotation par rapport à la poignée 2, via des ergots radiaux 42 espacés circonférentiellement et faisant saillie vers l'extérieur de la roue. Chaque ergot 42 est logé coulissant dans une rainure longitudinale 44 de la surface intérieure de la poignée 2, comme cela est schématisé pour l'une d'elles sur la figure 3. La première roue 34 demeure ainsi fixe en rotation dans la poignée 2, mais mobile en translation à l'intérieur de celle-ci, selon l'axe 12.

Sous la première roue 34, également dénommée roue de blocage, la seconde roue 36 comporte des secondes dents 46 qui s'étendent axialement vers le haut. Cette seconde roue 36 est portée par une bague 48, ou un fût, dont l'extrémité basse comprend un moyen de couplage en rotation 50 traversé par la vis de réglage 14. Le moyen 50 assure un couplage en rotation avec la vis 14 par complémentarité de forme, par exemple par la présence d'un méplat ou d'un élément similaire. La roue 36 demeure ainsi pilotée en rotation par la vis de réglage 14, et reste fixe en translation. Cette dernière particularité est obtenue en faisant reposer la bague 48 sur une butée basse 54 rapportée à l'intérieur de la poignée 2, et/ou en faisant reposer la roue 36 sur un épaulement intérieur 57 de cette poignée.

Le ressort 38 applique quant à lui une pression sur la partie supérieure de la première roue 34, via une extrémité basse de ressort logée dans une gorge supérieure de cette roue. L'effort axial développé par le ressort 38 tend ainsi la première roue 34 à se déplacer vers le bas et à se plaquer contre la seconde roue 36 qui reste fixe en translation, avec pour conséquence la mise en coopération des premières et secondes dents 40, 46.

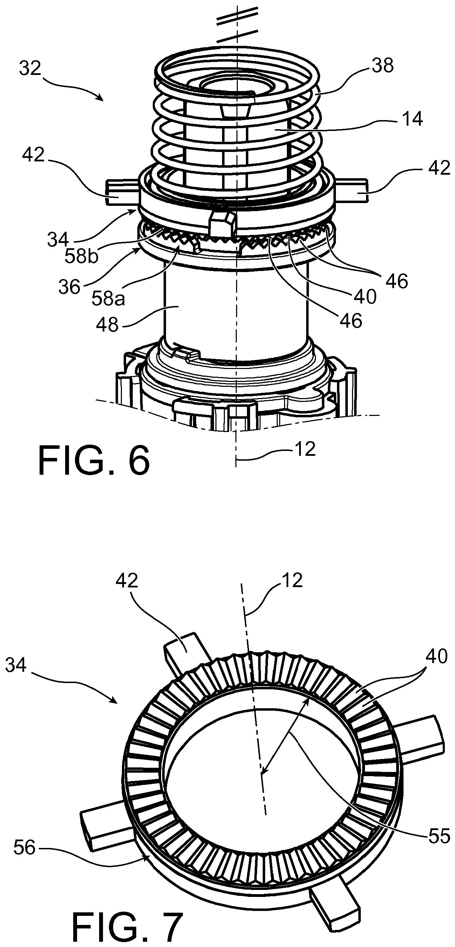

La disposition de ces dents est spécifique à l'invention, et elle va être décrite en référence aux figures 7 à 9.

Tout d'abord pour ce qui concerne la première roue 34, ses premières dents axiales 40 sont agencées au sein d'une unique rangée annulaire 56, qui est centrée sur l'axe 12 et de préférence continue sur 360°. Le nombre de dents 40 peut par exemple être de l'ordre de cinquante, avec un pas P régulier prévu entre ces mêmes dents 40.

La seconde roue 36 comporte quant à elle deux rangées annulaires, ou bien un nombre supérieur de rangées. Néanmoins, dans le mode de réalisation préféré qui est décrit, ce nombre est fixé à deux rangées annulaires concentriques 58a, 58b, centrées sur l'axe 12.

La première rangée 58a, correspondant à la rangée extérieure, est discontinue. Cela implique qu'elle est formée par des portions dentées 60a correspondant chacune à un arc de cercle pourvu de dents 46. Ces portions dentées 60a sont espacées circonférentiellement les unes des autres, de préférence de manière régulière. Entre celles-ci, il est prévu des portions non dentées 62a, correspondant à des portions évidées. A titre d'exemple, la première rangée annulaire 58a comporte quatre portions dentées 60a d'environ dix dents chacune, ainsi que quatre portions non dentées 62a présentant sensiblement la même étendue angulaire que les portions dentées 60a.

De manière analogue, la seconde rangée 58b, correspondant à la rangée intérieure, est discontinue. Cela implique qu'elle est formée par des portions dentées 60b correspondant chacune à un arc de cercle pourvu de dents 46. Ces portions dentées 60b sont espacées circonférentiellement les unes des autres, de préférence de manière régulière. Entre celles-ci, il est prévu des portions non dentées 62b, correspondant à des portions évidées. A titre d'exemple, la seconde rangée annulaire 58b comporte quatre portions dentées 60b d'environ dix dents chacune, ainsi que quatre portions non dentées 62b présentant sensiblement la même étendue angulaire que les portions dentées 60b.

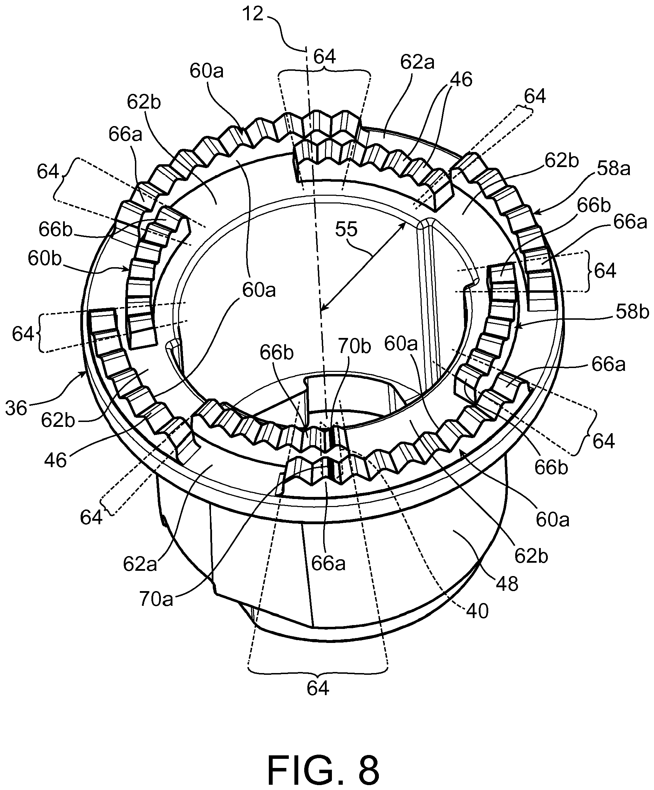

Comme cela est visible sur la figure 8, les portions dentées 60a, 60b sont agencées en décalage de phase, de sorte que chaque portion dentée 60a se trouve essentiellement en regard radialement d'une portion non dentée 62b de la seconde rangée 58b, de même que chaque portion dentée 60b se trouve essentiellement en regard radialement d'une portion non dentée 62a de la première rangée 58a.

Le pas entre les dents 46 de chaque portion dentée 60a, 60 est le même pas P que pour les dents 40 de la première roue 34.

Aux extrémités de ces portions dentées 60a, 60b qui se recouvrent partiellement selon la direction radiale 55, il est formé des zones de recouvrement de dents, ces zones étant référencées 64 sur la figure 8.

Chaque zone de recouvrement 64 est formée par un secteur de recouvrement 66a correspondant à une extrémité de l'une des portions dentées 60a, ainsi que par un secteur de recouvrement 66b correspondant à une extrémité de l'une des portions dentées 60b. Les deux secteurs 66a, 66b sont ainsi en regard radialement l'un de l'autre, pour former l'une des zones de recouvrement 64 ici prévues au nombre de huit, espacées régulièrement les unes des autres. Le nombre de dents par secteur 66a, 66b est par exemple compris entre deux et cinq.

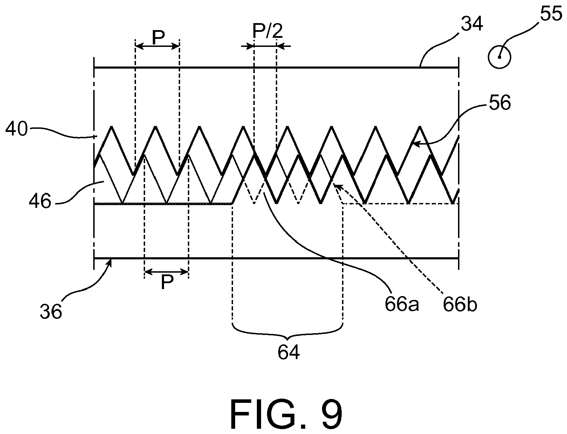

Au sein de chaque zone de recouvrement 64, les dents 46 du secteur 66a sont décalées d'un demi-pas P/2 par rapport aux dents 46 du secteur 66b. Par conséquent, chaque première dent 40 qui se trouve en coopération avec l'une des zones de recouvrement 64 de la seconde roue 36, est ainsi au contact d'une part de l'une des dents 46 du secteur 66a de cette zone, et au contact d'autre part de l'une des dents 46 du secteur 66b de cette même zone de recouvrement 64. Cette particularité a été représentée sur la figure 9, ainsi que sur le bas de la figure 8 montrant schématiquement une première dent 40 en contact avec deux dents 46 directement consécutives selon la direction circonférentielle, et appartenant respectivement aux deux secteurs 66a, 66b.

Pour ce faire, la longueur radiale de chaque première dent 40 est par exemple sensiblement deux fois plus grande que la longueur radiale de chaque seconde dent 46, ce qui permet d'établir deux surfaces de contact 70a, 70b entre une première dent 40, et les deux dents 46 directement consécutives au sein de la zone de recouvrement 64. A cet égard, il est noté que ces surfaces 70a, 70b, visibles sur le bas de la figure 8, sont agencées sur la partie supérieure des dents 46. Cela s'explique par le décalage de phases pratiqué entre les dents 46 des deux secteurs 66a, 66b, qui a pour conséquence que les premières dents 40 ne pénètrent pas entièrement dans les creux formés entre les secondes dents 46.

En fonctionnement, lorsque l'opérateur règle le volume souhaité via le bouton de commande 8, il entraîne la vis 14 qui elle-même provoque la rotation simultanée de la seconde roue 36. Le réglage du volume entre ses bornes inférieure et supérieure nécessite habituellement plusieurs tours du bouton de commande. Durant le mouvement de rotation de la seconde roue 36, les secondes dents 46 en mouvement exercent une force sur les premières dents 40 qui tend à repousser la première roue 34 axialement vers le haut, avant que celle-ci soit à nouveau forcée à se revenir vers le bas sous l'effet antagoniste du ressort 38. Ce mouvement de va-et-vient axial de la première roue de blocage 34 est observé à chaque passage de dent à une autre, et il permet au système 32 d'indexer la vis 14 dans un nombre de positions très élevé. Cela facilite l'exécution d'un réglage précis du volume souhaité. En particulier, au sein de chaque zone de recouvrement 64, le nombre de positions possibles pour une même première dent 40 relativement à la roue 46, correspond sensiblement au double du nombre de secondes dents 46 dans chaque secteur de recouvrement 66a, 66b formant cette zone 64. A titre indicatif, il est noté qu'au cours d'une rotation de 360° de la vis de réglage 14, celle-ci peut être indexée dans des dizaines de positions angulaires différentes, avec chacune de ces positions étant stable et précise, du fait d'une coopération à chaque fois différente entre les premières et secondes dents 40, 46.

La précision du réglage de volume est avantageusement accrue, sans que cela n'altère la facilité de fabrication des roues dentées 34, 36. Celles-ci peuvent par exemple aisément être réalisées par injection plastique, tout en conservant une qualité de dents satisfaisante.

Bien entendu, diverses modifications peuvent être apportées par l'homme du métier à l'invention qui vient d'être décrite, uniquement à titre d'exemples non limitatifs, et dont la portée est définie par les revendications annexées. Par exemple, des modifications pourraient être apportées pour placer les rangées annulaires multiples sur la première roue, et non sur la seconde roue dentée qui ne présenterait alors plus qu'une seule rangée annulaire de dents.

## Revendications

1. Système à crabotage (32) de maintien en position d'une vis de réglage de volume (14) pour un système de pipetage (1), le système à crabotage (32) étant **caractérisé en ce qu'**il comprend :
- une première roue dentée (34) comprenant des premières dents (40) ;
- une seconde roue dentée (36) comprenant des secondes dents (46), ladite première roue dentée (34) étant une roue de blocage destinée à être fixe en rotation par rapport à une pièce fixe (2) du système de pipetage, et la seconde roue (36) étant destinée à être solidaire en rotation de la vis de réglage (14), ou inversement ;
- des moyens élastiques de rappel (38) capables de rappeler les première et seconde roues (34, 36) l'une contre l'autre afin de faire coopérer les premières dents (40) avec les secondes dents (46),
lesdites secondes dents (46) de la seconde roue (36) formant un nombre N de rangées annulaires concentriques (58a, 58b), le nombre N étant un entier supérieur ou égal à 2 et chaque rangée étant éventuellement discontinue,
ladite seconde roue (36) présentant au moins une zone de recouvrement de dents (64) dans laquelle les N rangées annulaires (58a, 58b) de secondes dents présentent respectivement N secteurs de recouvrement (66a, 66b) qui se recouvrent les uns les autres selon une direction radiale (55) de la seconde roue,
les secondes dents (46) des N secteurs de recouvrement étant décalées angulairement les unes des autres de façon à ce qu'au moins l'une des premières dents (40) de la première roue dentée (34) puisse se trouver dans plusieurs positions relatives par rapport à la seconde roue (36), dans chacune desquelles cette première dent (40) est au contact de l'une des secondes dents (46) de l'un des N secteurs (66a), et au contact de l'une des secondes dents (46) d'un autre de ces N secteurs (66b).

2. Système selon la revendication 1, **caractérisé en ce que** chacun des N secteurs de recouvrement (66a, 66b) de la seconde roue dentée (36) présente un même pas P entre ses secondes dents (46), et **en ce que** le décalage angulaire entre deux secteurs de recouvrement (66a, 66b) quelconques et directement consécutifs selon la direction radiale (55), parmi lesdits N secteurs, présente une valeur P/N.

3. Système selon la revendication 2, **caractérisé en ce que** la première roue dentée (34) présente une unique rangée annulaire (56) de premières dents (40), présentant le même pas P entre les premières dents.

4. Système selon l'une quelconque des revendications précédentes, **caractérisé en ce que** le nombre entier N est égal à deux.

5. Système selon l'une quelconque des revendications précédentes, **caractérisé en ce que** ladite seconde roue (36) présente plusieurs zones de recouvrement de dents (64), espacées circonférentiellement les unes des autres, et **en ce que** le nombre de ces zones de recouvrement (64) est préférentiellement supérieur à trois.

6. Système selon l'une quelconque des revendications précédentes, **caractérisé en ce que** chaque rangée annulaire de secondes dents (58a, 58b) présente des portions dentées (60a, 60b) espacées circonférentiellement par des portions non dentées (62a, 62b), et **en ce que** les secteurs de recouvrement (64) sont formés aux extrémités des portions dentées (60a, 60b).

7. Système de pipetage (1) comprenant une vis de réglage de volume (14), ainsi qu'un système à crabotage (32) selon l'une quelconque des revendications précédentes, permettant de maintenir en position la vis de réglage de volume.

8. Système de pipetage selon la revendication 7, **caractérisé en ce que** la seconde roue dentée (36) est solidaire d'une bague (48) comportant un moyen de couplage en rotation (50) traversé par la vis de réglage de volume (14).

9. Système de pipetage selon la revendication 7 ou la revendication 8, **caractérisé en ce qu'**il comporte un compteur (20) à quatre chiffres, le compteur comprenant :
- un premier tambour (28a) renseignant sur un premier chiffre du compteur ;
- un second tambour (28b) renseignant sur un second chiffre du compteur ;
- un troisième tambour (28c) renseignant sur une troisième chiffre du compteur ; et
- un quatrième tambour (28d) renseignant sur un quatrième chiffre du compteur, le quatrième tambour étant entraîné en rotation par un système d'engrenages (22, 26) commandé en rotation par la vis de réglage de volume (14).

10. Système de pipetage selon l'une quelconque des revendications 7 à 9, **caractérisé en ce que** ladite roue de blocage (34), fixe en rotation par rapport à une pièce fixe (2) du système de pipetage, comporte des ergots radiaux (42) logés coulissants dans des rainures longitudinales correspondantes (44) de cette pièce fixe (2).

## Patentansprüche

1. Klauenkupplungssystem (32) zum Halten der Position einer Volumeneinstellschraube (14) für ein Pipettierungssystem (1), wobei das Klauenkupplungssystem (32), **dadurch gekennzeichnet ist, dass** es Folgendes umfasst:
- ein erstes Zahnrad (34), das erste Zähne (40) umfasst,
- ein zweites Zahnrad (36), das zweite Zähne (46) umfasst, wobei das erste Zahnrad (34) ein Sperrrad ist, das dazu bestimmt ist, bezüglich eines feststehenden Teils (2) des Pipettierungssystems drehfest zu sein, und das zweite Rad (36) dazu bestimmt ist, drehstarr mit der Einstellschraube (14) verbunden zu sein, oder umgekehrt,
- elastische Rückholmittel (38), die in der Lage sind, das erste und das zweite Rad (34, 36) gegeneinander zurückzuholen, damit die ersten Zähne (40) mit den zweiten Zähnen (46) zusammenwirken,
wobei die zweiten Zähne (46) des zweiten Rads (36) eine Anzahl N von konzentrischen ringförmigen Reihen (58a, 58b) bilden, wobei die Zahl N eine ganze Zahl größer oder gleich 2 ist und jede Reihe eventuell diskontinuierlich ist,
wobei das zweite Rad (36) mindestens eine Zahnabdeckzone (64) hat, in der die N ringförmigen Reihen (58a, 58b) von zweiten Zähnen jeweils N Abdecksektoren (66a, 66b) aufweisen, die einander in einer radialen Richtung (55) des zweiten Rads abdecken,
wobei die zweiten Zähne (46) der N Abdecksektoren winkelförmig zueinander versetzt sind, so dass sich mindestens einer der ersten Zähne (40) des ersten Zahnrads (34) in mehreren Relativpositionen bezüglich des zweiten Rads (36) befinden kann, wobei dieser erste Zahn (40) in jeder von ihnen in Kontakt mit einem der zweiten Zähne (46) des einen der N Sektoren (66a) und in Kontakt mit einem der zweiten Zähne (46) eines anderen dieser N Sektoren (66b) ist.

2. System nach Anspruch 1, **dadurch gekennzeichnet, dass** jeder der N Abdecksektoren (66a, 66b) des zweiten Zahnrads (36) dieselbe Teilung P zwischen seinen zweiten Zähnen (46) aufweist und dass der Winkelversatz zwischen zwei beliebigen und in der radialen Richtung (55) unmittelbar aufeinanderfolgenden Abdecksektoren (66a, 66b) unter den N Sektoren einen Wert P/N hat.

3. System nach Anspruch 2, **dadurch gekennzeichnet, dass** das erste Zahnrad (34) eine einzige ringförmige Reihe (56) von ersten Zähnen (40) aufweist, die dieselbe Teilung P zwischen den ersten Zähnen aufweist.

4. System nach einem der vorhergehenden Ansprüche, **dadurch gekennzeichnet, dass** die ganze Zahl N gleich zwei ist.

5. System nach einem der vorhergehenden Ansprüche, **dadurch gekennzeichnet, dass** das zweite Rad (36) mehrere umfangsmäßig voneinander beabstandete Zahnabdeckzonen (64) aufweist und dass die Anzahl dieser Abdeckzonen (64) vorzugsweise größer drei ist.

6. System nach einem der vorhergehenden Ansprüche, **dadurch gekennzeichnet, dass** jede ringförmige Reihe (58a, 58b) von zweiten Zähnen gezahnte Abschnitte (60a, 60b) aufweist, die durch nicht gezahnte Abschnitte (62a, 62b) umfangsmäßig voneinander beabstandet sind, und dass die Abdeckzonen (64) an den Enden der gezahnten Abschnitte (60a, 60b) ausgebildet sind.

7. Pipettierungssystem (1), umfassend eine Volumeneinstellschraube (14) sowie ein Klauenkupplungssystem (32) nach einem der vorhergehenden Ansprüche, das das Halten der Position der Volumeneinstellschraube gestattet.

8. Pipettierungssystem nach Anspruch 7, **dadurch gekennzeichnet, dass** das zweite Zahnrad (36) fest mit einem Ring (48) verbunden ist, der ein Drehkoppelmittel (50) aufweist, durch das die Volumeneinstellschraube (14) geht.

9. Pipettierungssystem nach Anspruch 7 oder Anspruch 8, **dadurch gekennzeichnet, dass** es einen vierstelligen Zähler (20) aufweist, wobei der Zähler Folgendes umfasst:
- eine erste Trommel (28a) mit einer Angabe über eine erste Zahl des Zählers,
- eine zweite Trommel (28b) mit einer Angabe über eine zweite Zahl des Zählers,
- eine dritte Trommel (28c) mit einer Angabe über eine dritte Zahl des Zählers und
- eine vierte Trommel (28d) mit einer Angabe über eine vierte Zahl des Zählers, wobei die vierte Trommel durch ein Getriebesystem (22, 26) drehangetrieben wird, das durch die Volumeneinstellschraube (14) drehgesteuert wird.

10. Pipettierungssystem nach einem der Ansprüche 7 bis 9, **dadurch gekennzeichnet, dass** das Sperrrad (34), das bezüglich eines feststehenden Teils (2) des Pipettierungssystems drehfest ist, radiale Zapfen (42) aufweist, die gleitend in entsprechenden Längsnuten (44) dieses feststehenden Teils (2) angeordnet sind.

## Claims

1. A ring dogging system (32) for holding the position of a volume adjustment screw (14) for a pipetting system (1), the ring dogging system (32) being **characterised in that** it comprises:
- a first toothed wheel (34) comprising first teeth (40);
- a second toothed wheel (36) comprising second teeth (46), said first toothed wheel (34) being a lock wheel for being rotatably fixed with respect to a fixed piece (2) of the pipetting system, and the second wheel (36) being rotatably integral with the adjustment screw (14), or vice versa;
- elastic return means (38) capable of returning the first and second wheels (34, 36) against each other in order to make the first teeth (40) cooperate with the second teeth (46),
said second teeth (46) of the second wheel (36) forming a number N of concentric annular rows (58a, 58b), the number N being an integer higher than or equal to 2 and each row being possibly discontinuous,
said second wheel (36) having at least one tooth covering zone (64) in which the N annular rows (58a, 58b) of second teeth respectively have N covering sectors (66a, 66b) which cover each other along a radial direction (55) of the second wheel,
the second teeth (46) of the N covering sectors being angularly offset from each other such that at least one of the first teeth (40) of the first toothed wheel (34) can be in several relative positions with respect to the second wheel (36), in each of which this first tooth (40) is in contact with one of the second teeth (46) of one of the N sectors (66a), and in contact with one of the second teeth (46) of another of these N sectors (66b).

2. The system according to claim 1, **characterised in that** each of the N covering sectors (66a, 66b) of the second toothed wheel (36) has a same pitch P between its second teeth (46), and **in that** the angular offset between any two covering sectors (66a, 66b) directly consecutive along the radial direction (55), among said N sectors, has a value P/N.

3. The system according to claim 2, **characterised in that** the first toothed wheel (34) has a single annular row (56) of first teeth (40), having the same pitch P between the first teeth.

4. The system according to any of the preceding claims, **characterised in that** the integer N is equal to two.

5. The system according to any of the preceding claims, **characterised in that** said second wheel (36) has several tooth covering zones (64), circumferentially spaced from each other, and **in that** the number of these covering zones (64) is preferentially higher than three.

6. The system according to any of the preceding claims, **characterised in that** each annular row of second teeth (58a, 58b) has toothed portions (60a, 60b) circumferentially spaced apart by non-toothed portions (62a, 62b), and **in that** the covering sectors (64) are formed at the ends of the toothed portions (60a, 60b).

7. A pipetting system (1) comprising a volume adjustment screw (14), as well as a ring dogging system (32) according to any of the preceding claims, for holding the position of the volume adjustment screw.

8. The pipetting system according to claim 7, **characterised in that** the second toothed wheel (36) is integral with a ring (48) including a rotatable coupling means (50) through which the volume adjustment screw (14) passes.

9. The pipetting system according to claim 7 or claim 8, **characterised in that** it includes a four-digit counter (20), the counter comprising:
- a first drum (28a) informing about a first digit of the counter;
- a second drum (28b) informing about a second digit of the counter;
- a third drum (28c) informing about a third digit of the counter; and
- a fourth drum (28d) informing about a fourth digit of the counter, the fourth drum being rotatably driven by a gear system (22, 26) rotatably controlled by the volume adjustment screw (14).

10. The pipetting system according to any of claims 7 to 9, **characterised in that** said lock wheel (34), rotatably fixed with respect to a fixed piece (2) of the pipetting system, includes radial lugs (42) slidably housed in corresponding longitudinal grooves (44) of this fixed piece (2).
